# EUROPÄISCHE PATENTSCHRIFT

(11) **EP 3 165 936 B1**
(45) Veröffentlichungstag und Bekanntmachung des Hinweises auf die Patenterteilung: **18.08.2021**
(21) Anmeldenummer: 15192818.1
(22) Anmeldetag: 03.11.2015
(51) Int. Cl.: G01S 1/00

(54) **VERFAHREN UND VORRICHTUNG ZUR BESEITIGUNG VON SIGNALSTÖRUNGEN**
METHOD AND DEVICE FOR REMOVING SIGNAL INTERFERENCE
PROCÉDÉ ET DISPOSITIF D'ÉLIMINATION DE PERTURBATIONS DE SIGNAUX

(43) Veröffentlichungstag der Anmeldung: 10.05.2017
(73) Patentinhaber: Rohde & Schwarz GmbH & Co. KG, 81671 München (DE)
(72) Erfinder: Strobel, Philipp, 81677 München (DE)
(74) Vertreter: Isarpatent

(56) Entgegenhaltungen:
- EP-A1- 1 111 802
- US-A1- 2011 129 036

## Beschreibung

Die Erfindung betrifft ein Verfahren und eine Vorrichtung zur Beseitigung von Signalstörungen und insbesondere einen Überwachungsempfänger, bei dem Signalstörungen eines Empfangssignals beseitigt werden.

Bei Funkempfangsvorrichtungen wird zur Durchführung bestimmter Messungen zwischen verschiedenen Empfangsantennen und/oder Empfangsfrequenzen umgeschaltet. So kann beispielsweise durch Umschalten zwischen verschiedenen Empfangsantennen ein auf einer Empfangsfrequenz gelegener Frequenzkanal abgehört werden und gleichzeitig parallel auf dieser Empfangsfrequenz eine Funksignalquelle angepeilt werden. Weiterhin können durch periodisches Umschalten zwischen zwei Empfangsfrequenzen zwei Frequenzkanäle gleichzeitig abgehört und/oder vermessen/klassifiziert werden. Durch das Umschalten zwischen den Empfangsantennen und/oder Empfangsfrequenzen kann es jedoch zu Signalstörungen innerhalb des Empfangssignals kommen, d.h. die in den empfangenen Funksignalen enthaltenen Toninformationen werden gestört, wobei sie in der Regel derart gestört werden, dass sie für die weitere Auswertung unbrauchbar sind.

Die EP 1 111 802 A1 zeigt eine Vorrichtung zum Reduzieren von Impulsstörungen in einem Audio-Signal.

Es ist eine Aufgabe der vorliegenden Erfindung, eine Vorrichtung und ein Verfahren zum Beseitigen von Signalstörungen zu schaffen.

Diese Aufgabe wird erfindungsgemäß durch einen Überwachungsempfänger mit den in Patentanspruch 1 angegebenen Merkmalen gelöst.

Die Erfindung schafft ferner ein Verfahren zum Beseitigen von Signalstörungen mit den in Patentanspruch 7 angegebenen Merkmalen.

Im Weiteren werden mögliche Ausführungsformen des erfindungsgemäßen Überwachungsempfängers und des erfindungsgemäßen Verfahrens zum Beseitigen von Signalstörungen unter Bezugnahme auf die beigefügten Figuren näher erläutert.

Es zeigen:
- Fig. 1: ein Blockschaltbild zur Darstellung eines möglichen Ausführungsbeispiels eines erfindungsgemäßen Überwachungsempfängers;
- Figuren 2, 3: Signaldiagramme zur Erläuterung der Funktionsweise eines erfindungsgemäßen Überwachungsempfängers;
- Fig. 4: ein Blockschaltbild zur Darstellung eines weiteren Ausführungsbeispiels eines erfindungsgemäßen Überwachungsempfängers;
- Figuren 5, 6: Signaldiagramme zur Darstellung unterschiedlicher Ausführungsformen der erfindungsgemäßen Vorrichtung und des erfindungsgemäßen Verfahrens zum Beseitigen von Signalstörungen.

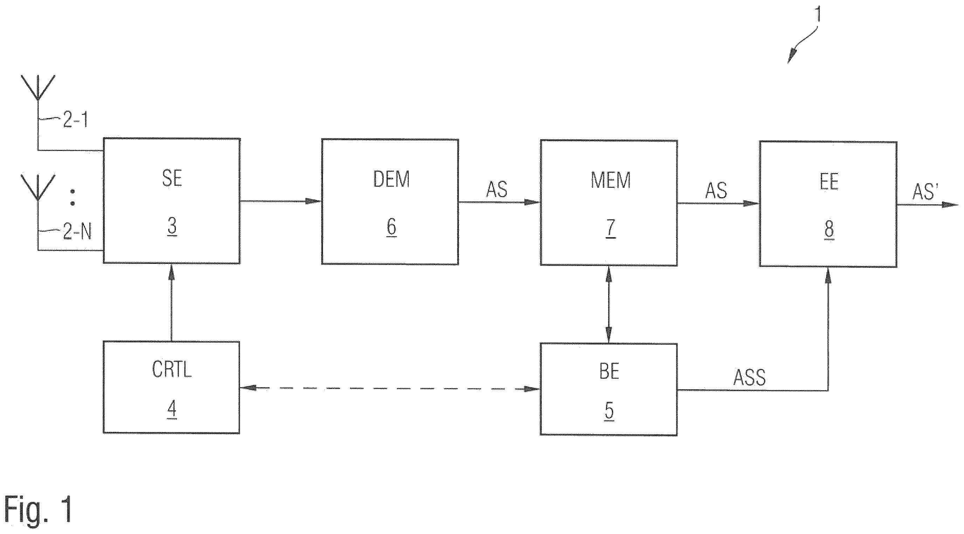

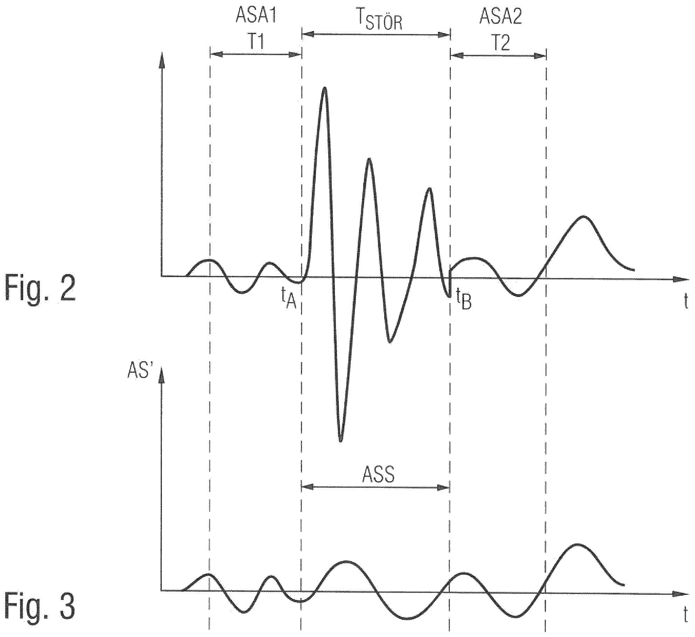

Fig. 1 zeigt ein exemplarisches Ausführungsbeispiels eines Überwachungsempfängers 1. Der Überwachungsempfänger 1 empfängt mindestens ein Funksignal durch mindestens eine Empfangsantenne. Bei dem in Fig. 1 dargestellten Ausführungsbeispiel verfügt der Überwachungsempfänger 1 über mindestens eine Empfangsantenne 2, die an eine Schalteinheit 3 angeschlossen ist. Bei dem in Fig. 1 dargestellten Ausführungsbeispiel sind N Empfangsantennen 2-i mit der Schalteinheit 3 verbunden. Durch die Schalteinheit 3 des Überwachungsempfängers 1 kann zwischen verschiedenen Empfangsantennen und/oder Empfangsfrequenzen zum Erzeugen eines Empfangssignals periodisch umgeschaltet werden. Bei dem in Fig. 1 dargestellten Ausführungsbeispiel wird das periodische Umschalten der Empfangsantennen 2-i und/oder der Empfangsfrequenzen durch eine Ablaufsteuerung 4 des Überwachungsempfängers 1 gesteuert. Die durch das periodische Umschalten hervorgerufenen Signalstörungen innerhalb des Empfangssignals werden bei dem erfindungsgemäßen Überwachungsempfänger 1 jeweils durch eine Audiosignalsequenz ASS ersetzt, die durch eine Berechnungseinheit 5 des Überwachungsempfängers 1 aus dem demodulierten Funksignal berechnet wird. Bei einer möglichen Ausführungsform wird die Audiosignalsequenz ASS aus dem demodulierten Funksignal interpoliert. Bei dem in Fig. 1 dargestellten Ausführungsbeispiel wird das Funksignal durch eine Demodulationseinheit 6 zur Gewinnung eines durch das Funksignal transportierten Audiosignals AS demoduliert. Ein derartiges Audiosignal ist beispielhaft in dem Signaldiagramm der Fig. 2 dargestellt. Das Audiosignal weist zwischen den Zeitpunkten t_{A} und t_{B} eine Signalstörung auf, die durch das Umschalten zwischen verschiedenen Empfangsantennen und/oder Empfangsfrequenzen hervorgerufen wird. Durch das periodische Umschalten hervorgerufene Signalstörungen werden bei dem erfindungsgemäßen Überwachungsempfänger 1 jeweils durch eine Audiosignalsequenz ASS ersetzt, die durch die Berechnungseinheit 5 des Überwachungsempfängers 1 aus dem demodulierten Funksignal berechnet wird. In Fig. 3 ist die berechnete Audiosignalsequenz ASS dargestellt.

Bei dem in Fig. 1 dargestellten Ausführungsbeispiel wird das durch die Demodulationseinheit 6 erzeugte Audiosignal AS einschließlich der darin enthaltenen periodisch auftretenden Signalstörungen in einem Signalspeicher 7 zwischengespeichert. Das zwischengespeicherte Audiosignal AS kann mehrere Signalstörungen, wie sie in Fig. 2 dargestellt sind, enthalten. Aufgrund des periodischen Umschaltvorgangs ist der Abstand zwischen den Signalstörungen innerhalb des zwischengespeicherten Signals im Wesentlichen konstant. Der Schaltvorgang wird durch die Ablaufsteuerung 4 gesteuert. Bei einer möglichen Ausführungsform sind somit die Schaltzeitpunkte t_{A}, t_{B} sowie die Dauer der Signalstörung T_{STÖR} der Berechnungseinheit 5 bekannt. Bei einer alternativen Ausführungsform kann die Berechnungseinheit 5 auch mit der Ablaufsteuerung 4 verbunden sein, wie in Fig. 1 durch die gestrichelte Linie angedeutet. Bei dieser Ausführungsform kann die Ablaufsteuerung 4 der Berechnungseinheit 5 die Schaltzeitpunkte t_{A}, t_{B} melden. Die Berechnungseinheit 5 berechnet die Audiosignalsequenz ASS, wobei eine in dem zwischengespeicherten Audiosignal AS enthaltene Signalstörung mittels einer Ersetzungseinheit 8 des Überwachungsempfängers 1 automatisch durch die berechnete Audiosignalsequenz ASS ersetzt wird. Das Ausgangssignal der Ersetzungseinheit 8 ist das von Signalstörungen bereinigte Audiosignal AS', wie es in Fig. 1 dargestellt ist.

Bei einer möglichen Ausführungsform sind die Demodulationseinheit 6, der Signalspeicher 7, die Berechnungseinheit 5 und die Ersetzungseinheit 8 in den Überwachungsempfänger integriert. Bei einer alternativen Ausführungsform befinden sich die Demodulationseinheit 6, der Signalspeicher 7, die Berechnungseinheit 5 und die Ersetzungseinheit 8 ganz oder teilweise auf einem externen Rechner.

Bei einer möglichen Ausführungsform berechnet die Berechnungseinheit 5 des Überwachungsempfängers 1 die eine Signalstörung ersetzende Audiosignalsequenz ASS aus Audiosignalabschnitten des im Signalspeicher 7 zwischengespeicherten Empfangssignals. Diese Audiosignalabschnitte liegen vorzugsweise unmittelbar vor oder nach der auftretenden Signalstörung. Fig. 2 zeigt einen ersten Audiosignalabschnitt ASA1 in dem Audiosignal AS, welcher unmittelbar vor der auftretenden Signalstörung liegt. Ferner zeigt Fig. 2 einen zweiten Audiosignalabschnitt ASA2, der unmittelbar nach der auftretenden Signalstörung liegt. Bei einer möglichen Ausführungsform interpoliert die Berechnungseinheit 2 die ersetzende Audiosignalsequenz ASS aus Audiosignalabschnitten ASA des demodulierten Funksignals. Dabei erfolgt die Interpolation vorzugsweise auf Basis eines Audiosignalabschnittes ASA1, der unmittelbar vor der Signalstörung liegt, und auf Basis eines zweiten Audiosignalabschnitts ASA2, der unmittelbar nach der aufgetretenen Signalstörung liegt. Bei alternativen Ausführungsformen können auch Audiosignalabschnitte verwendet werden, die allesamt vor der Signalstörung liegen. Bei einer weiteren möglichen Ausführungsform können auch Audiosignalabschnitte verwendet werden, die allesamt hinter der Signalstörung liegen.

Hinsichtlich der Kenntnis der Lage der Signalstörungen in dem demodulierten Funksignal bestehen erfindungsgemäß verschiedene Ausführungsvarianten. Bei einer möglichen Ausführungsform ist der Berechnungseinheit 5 die Lage der Signalstörung zwischen den beiden Schaltzeitpunkten t_{A}, t_{B} ex ante aufgrund der Messanwendung des Überwachungsempfängers 1 bekannt. Alternativ werden die Schaltzeitpunkte t_{A}, t_{B} der Berechnungseinheit 5 von der Ablaufsteuerung 4 über eine Leitung oder einen Bus gemeldet. Bei einer weiteren möglichen Ausführungsvariante wird eine auftretende Signalstörung durch einen in dem Überwachungsempfänger 1 integrierten Detektor detektiert bzw. erkannt. Insbesondere bei Auftreten von Pegelspitzen im Signal, wie sie beispielhaft in Fig. 2 dargestellt sind, kann ein derartiger Detektor auftretende Signalstörungen innerhalb des Audiosignals AS erkennen.

Da die genauen Zeitpunkte der auftretenden Signalstörung innerhalb des Audiosignals AS bekannt sind, können diese gestörten Ton- bzw. Audioabschnitte durch die Ersetzungseinheit 8 durch Toninformationen ersetzt werden, die aus der vor und/oder nach der Signalstörung vorliegenden Toninformation mittels Interpolation gewonnen werden. Bei einer möglichen Ausführungsform verwendet die Berechnungseinheit 5 hierzu ein bestimmtes Interpolationsverfahren. Bei einer möglichen Ausführungsform ist das verwendete Interpolationsverfahren ein Interpolationsverfahren, welches autoregressive Modulierung einsetzt. Ein alternatives Interpolationsverfahren, welches durch die Berechnungseinheit 5 verwendet werden kann, umfasst eine lineare Vorhersage bzw. Linear Prediction. In weiteren Ausführungsvarianten verwendet die Berechnungseinheit 5 zur Interpolation der Audiosignalsequenz ASS spektrale Interpolation, Interleaving Concealment oder Incremental Subspace Learning. Bei einer möglichen Ausführungsvariante des erfindungsgemäßen Überwachungsempfängers 1 kann die Berechnungseinheit 5 je nach Anwendungsfall zwischen verschiedenen Interpolationsverfahren umschalten. Eine oder mehrere der in Fig. 1 dargestellten Einheiten können bei einer möglichen Ausführungsform in einem internen oder externen Rechenwerk integriert sein.

Bei einer möglichen Ausführungsform des erfindungsgemäßen Überwachungsempfängers 1 schaltet die Schalteinheit 3 des Überwachungsempfängers 1 zum Anpeilen einer Funksignalquelle verschiedene Empfangsantennen 2-i bei gleicher Empfangsfrequenz periodisch um. Während des Anpeilens einer Funksignalquelle wird das empfangene Funksignal durch die Demodulationseinheit 6 des Überwachungsempfängers 1 zur Gewinnung des durch das Funksignal transportierten Audiosignals AS demoduliert. Die durch das periodische Umschalten der Empfangsantennen 2-i hervorgerufenen Signalstörungen innerhalb des demodulierten Funksignals werden durch eine Audiosignalsequenz ASS ersetzt, die durch die Berechnungseinheit 5 des Überwachungsempfängers 1 aus dem empfangenen Funksignal automatisch berechnet wird.

Bei einer weiteren möglichen Ausführungsform des erfindungsgemäßen Überwachungsempfängers 1 schaltet die Schalteinheit 3 des Überwachungsempfängers 1 zum Abhören und/oder zur Vermessung bzw. Klassifizierung verschiedener Sendekanäle und/oder zur Signalsuche zwischen verschiedener Empfangsfrequenzen und/oder Empfangsfrequenzbereichen periodisch um.

Die aus den verschiedenen Empfangsfrequenzen empfangenen Funksignale werden durch die Demodulationseinheit 6 des Überwachungsempfängers 1 zur Gewinnung der durch die Funksignale transportierten Audiosignale AS demoduliert. Die durch das periodische Umschalten zwischen den Empfangsfrequenzen innerhalb der demodulierten Funksignale hervorgerufenen Signalstörungen werden dabei jeweils durch eine Audiosignalsequenz ASS ersetzt, die durch die Berechnungseinheit 5 des Überwachungsempfängers 1 aus dem empfangenen und demodulierten entsprechenden Funksignal berechnet wird.

Die Schalteinheit 3 des Überwachungsempfängers 1 wird vorzugsweise zum Anpeilen einer Funksignalquelle auf einer bestimmten Empfangsfrequenz zwischen verschiedenen Empfangsantennen 2-i periodisch umgeschaltet, wobei parallel dazu zum Abhören und/oder zur Vermessung bzw. Klassifizierung verschiedener Sendesignale und/oder zur Signalsuche zwischen verschiedenen Empfangsfrequenzen und/oder Empfangsfrequenzbereichen periodisch umgeschaltet wird.

Bei dem erfindungsgemäßen Überwachungsempfänger 1 werden somit gestörte Signalteile auf Basis bekannter Audio-Interpolationsverfahren ersetzt. Bei einer möglichen Ausführungsform handelt es sich bei dem erfindungsgemäßen Überwachungsempfänger 1 um einen Funkpeilempfänger.

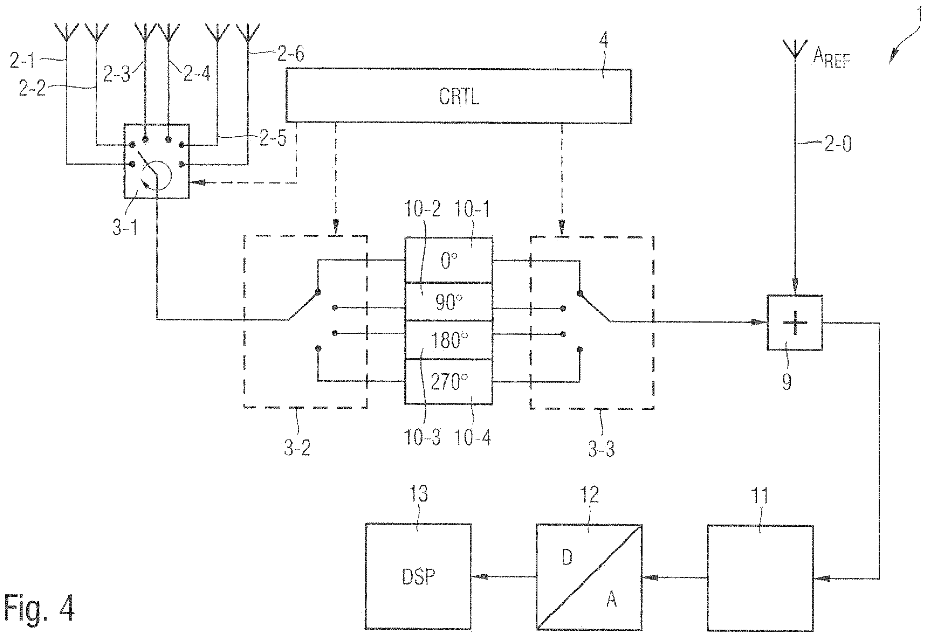

Fig. 4 zeigt ein Ausführungsbeispiel des erfindungsgemäßen Überwachungsempfängers 1, der als Funkpeilempfänger ausgelegt ist. Der Überwachungsempfänger 1 weist eine Referenzempfangsantenne 2-0 auf sowie mehrere weitere Empfangsantennen 2-1 bis 2-6, wie in Fig. 4 dargestellt. Ein erstes Schaltelement 3-1 schaltet mit relativ hoher Schaltgeschwindigkeit zwischen den verschiedenen Empfangsantennen 2-1, 2-2, 2-3, 2-4, 2-5, 2-6 umlaufend um. Hierdurch können auch zeitlich relativ kurze Signale angepeilt werden. Das von dem Empfangsantennenfeld erhaltene Funksignal wird einem Schaltelement 3-2 zugeführt, welches ebenfalls durch die Ablaufsteuerung 4 angesteuert wird. Die Ablaufsteuerung 4 schaltet synchron zu dem zweiten Schaltelement 3-2 ein weiteres Schaltelement 3-3, wie in Fig. 4 dargestellt. Das Schaltelement 3-2 bildet einen Signaldemultiplexer und das Schaltelement 3-3 einen Multiplexer, dessen Ausgangssignal einem Signaladdierer 9 zugeführt wird. Zwischen dem Demultiplexer 3-2 und dem Multiplexer 3-3 sind Phasenschieber 10-1, 10-2, 10-3, 10-4 vorgesehen, welche das von dem Antennenfeld zugeschaltete Empfangssignal jeweils um 0°, 90°, 180° und 270° phasenverschieben. Das phasenverschobene Signal gelangt zu dem Signaladdierer 9, welcher das von der Referenzantenne 2-0 empfangene Funksignal mit dem phasenverschobenen Empfangssignal summiert. Der Receiver 11 des Überwachungsempfängers 1 extrahiert aus dem Empfangssignal das Basisbandsignal, welches durch einen Digital-AnalogWandler 12 einem digitalen Signalprozessor DSP 13 übergeben wird, der die Amplitude misst. Aus den vier Amplitudenwerten der phasenverschobenen Signale A1, A2, A3, A4 kann der digitale Signalprozessor 13 den Phasenwinkel ϕ zwischen dem Empfangssignal und dem Referenzsignal bestimmen bzw. berechnen. Aus den Phasenwinkeln ϕ für jede Empfangsantenne 2-i kann der digitale Signalprozessor 13 die Einfallsrichtung des Empfangssignals (Peilergebnis) berechnen.

Die Schalteinheiten 3-1, 3-2, 3-3 bilden in dem Überwachungsempfänger 1 eine Schalteinheit 3, bei der periodisch zwischen verschiedenen Empfangsantennen 2-i umgeschaltet wird. Die dabei auftretenden Signalstörungen werden bei dem in Fig. 4 dargestellten erfindungsgemäßen Überwachungsempfänger 1 automatisch beseitigt. Hierzu verfügt der digitale Signalprozessor DSP 13 vorzugsweise über eine Berechnungseinheit 5, die eine Audiosignalsequenz ASS aus dem demodulierten Funksignal interpoliert. Die durch das periodische Umschalten der Schalteinheiten 3-i hervorgerufenen Signalstörungen innerhalb des Empfangssignals werden jeweils durch eine Audiosignalsequenz ASS ersetzt, die durch die Berechnungseinheit 5 innerhalb des digitalen Signalprozessors 13 aus dem demodulierten Funksignal berechnet wird. Bei einer möglichen Ausführungsform verfügt der digitale Signalprozessor 13 über einen Signalspeicher 7 und eine Ersetzungseinheit 8, wie sie in Fig. 1 dargestellt sind. Der in Fig. 4 dargestellte Überwachungsempfänger 1 bietet den Vorteil, dass eine Signalquelle bei einer bestimmten Empfangsfrequenz f1 angepeilt werden kann, um gleichzeitig ein Funksignal auf dieser Frequenz f1 mittels eines Empfängers abgehört werden kann. Der erfindungsgemäße Einkanal-Funkpeilüberwachungsempfänger, wie er in Fig. 4 dargestellt ist, kann daher gleichzeitig ein Funksignal peilen und gleichzeitig die darin enthaltenen Toninformationen ohne Störungen gewinnen.

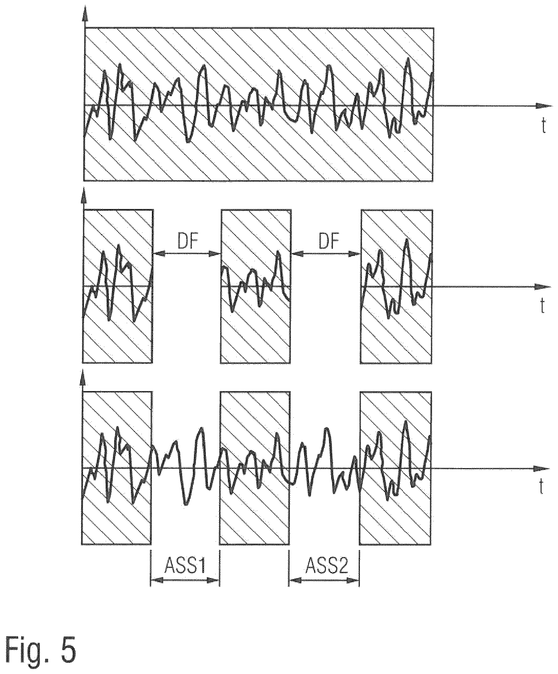

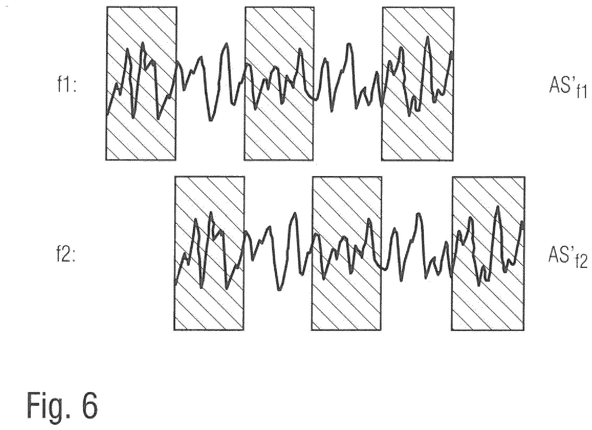

Die Figuren 5, 6 zeigen Signaldiagramme zur Darstellung unterschiedlicher Ausführungsvarianten des erfindungsgemäßen Verfahrens zum Beseitigen von Signalstörungen. Wie man in Fig. 5 erkennen kann, kommt es aufgrund der zur Peilung notwendigen Schaltvorgänge zu Signalstörungen in dem Audiosignal. Die Signalstörungen treten dabei, wie in Fig. 5 dargestellt, periodisch auf und weisen eine im Wesentlichen konstante zeitliche Länge auf. Die durch die Peilung (Direction Finding DF) auftretenden Signalstörungen werden, wie in Fig. 5 dargestellt, jeweils durch Audiosignalsequenzen ASS1, ASS2 ersetzt, die durch die Berechnungseinheit 5, insbesondere durch Interpolation, vorzugsweise in Echtzeit berechnet werden und die auftretenden Signalstörungsabschnitte zur Vervollständigung des Audiosignals ersetzen. Hierdurch ist es möglich, das Audiosignal AS weitestgehend störungsfrei während des Peilungsvorgangs abzuhören. Fig. 5 zeigt eine Ausführungsvariante, bei der zwischen verschiedenen Empfangsantennen umgeschaltet wird.

Fig. 6 zeigt ein Signaldiagramm zur Verdeutlichung einer weiteren Ausführungsvariante, bei der zwischen verschiedenen Empfangsfrequenzen zum Erzeugen eines Empfangssignals periodisch umgeschaltet wird. Um ein klares Audiosignal auf zwei unabhängigen Frequenzkanälen mithilfe eines einzigen Empfängers zu erhalten, wird zwischen zwei Frequenzkanälen bzw. Empfangsfrequenzen f1, f2 umgeschaltet. Ein Teil des Audiosignals wird für jeden Frequenzkanal bzw. Empfangsfrequenz zwischengespeichert und die Lücken in den Audiosignalströmen, die durch den Schaltvorgang auftreten, werden mittels Interpolation geschlossen. Bei dem in Fig. 6 dargestellten Ausführungsbeispiel kann auf einer ersten Empfangsfrequenz f1 und gleichzeitig parallel dazu auf einer zweiten Empfangsfrequenz f2 abgehört werden.

Bei einer möglichen Ausführungsform des erfindungsgemäßen Überwachungsempfängers 1 kann dieser in verschiedenen Betriebsmodi betrieben werden. In einem ersten Betriebsmodus wird auf einer Empfangsfrequenz gleichzeitig parallel abgehört und eine Funksignalquelle angepeilt. In einem weiteren Betriebsmodus kann der Überwachungsempfänger 1 gleichzeitig auf zwei verschiedenen Empfangsfrequenzen f1, f2 abhören. In einem weiteren Betriebsmodus kann der Überwachungsempfänger 1 auf einer ersten Frequenz f1 die Peilung einer Funksignalquelle vornehmen und gleichzeitig auf einer anderen Empfangsfrequenz ein Funksignal abhören.

Neben dem Abhören kann der Überwachungsempfänger 1 auch zur Vermessung bzw. Klassifizierung verschiedener Sendekanäle verwendet werden. Weiterhin ist es möglich, dass der erfindungsgemäße Überwachungsempfänger 1 zur Signalsuche zwischen verschiedenen Empfangsfrequenzen und/oder Empfangsfrequenzbereichen periodisch umschaltet. Die durch das Schalten hervorgerufenen Signalstörungen werden dabei automatisch beseitigt.

Der erfindungsgemäße Überwachungsempfänger 1 kann in einem tragbaren Gerät integriert sein. Die Signalaufbereitung des Audiosignals zur Beseitigung von Signalstörungen, die durch Umschaltvorgänge hervorgerufen werden, erfolgt vorzugsweise in Echtzeit während des Betriebs des Überwachungsempfängers 1. Bei einer möglichen Ausführungsform kann automatisch oder manuell zwischen verschiedenen Berechnungs- bzw. Interpolationsverfahren zur Beseitigung der Signalstörungen umgeschaltet werden. Die Berechnungseinheit 5 des Überwachungsempfängers 1 ist vorzugsweise in einem digitalen Signalprozessor DSP 13 integriert. Bei einer weiteren möglichen Ausführungsform weist die Berechnungseinheit 5 eine oder mehrere Signalprozessoren auf, die ein Signalverarbeitungsverfahren in Echtzeit ausführen, wobei die periodisch auftretenden Signalstörungen innerhalb eines Empfangssignals jeweils durch Audiosignalsequenzen ASS ersetzt werden, die aus einem durch mindestens eine Empfangsantenne empfangenen und durch das Funksignal transportierten Audiosignal interpoliert werden. Der Signalverarbeitungsalgorithmus kann bei einer möglichen Ausführungsform über eine Konfigurationsschnittstelle des Überwachungsempfängers 1 konfiguriert werden. Der erfindungsgemäße Überwachungsempfänger 1 eignet sich bei einer möglichen Ausführungsform auch zum Abhören auf einer Empfangsfrequenz, während gleichzeitig ein Signal auf einer anderen Empfangsfrequenz vermessen bzw. klassifiziert wird. Weiterhin kann der erfindungsgemäße Überwachungsempfänger 1 auch zum Abhören auf einer Empfangsfrequenz und zur gleichzeitigen Signalsuche auf einem anderen Frequenzbereich eingesetzt werden. Der Überwachungsempfänger 1 bzw. Monitoring-Empfänger wird im Gegensatz zu einem Rundfunkempfänger in einem nicht kooperativ arbeitenden Rundfunksystem eingesetzt, d.h. der Überwachungsempfänger 1 ist in der Lage, auf beliebigen Empfangsfrequenzen ein beliebiges Signal zu verarbeiten. Der erfindungsgemäße Überwachungsempfänger 1 ist vielseitig einsetzbar. Er kann beispielsweise zur parallelen Peilung bzw. Ortung und Abhören von Funkkanälen, beispielsweise einem Funkgerät, verwendet werden. Weiterhin kann der Überwachungsempfänger 1 zur Richtungsfindung (Direction Finding DF) bzw. Peilung in Verkehrssteuerungssystemen für die See- und Luftfahrt mit gleichzeitiger Abhör- und Aufzeichnungsmöglichkeit verwendet werden. Weiterhin ist eine parallele Peilung und Audioaufzeichnung von verschiedenen Kanälen möglich. Weiterhin bietet der erfindungsgemäße Überwachungsempfänger 1 die Möglichkeit, zwei vollständig unabhängige Frequenzkanäle innerhalb des Frequenzspektrums gleichzeitig abzuhören und/oder aufzuzeichnen und/oder zu vermessen/klassifizieren. Mit dem erfindungsgemäßen Verfahren können Funkpeilvorrichtungen bzw. Überwachungsempfänger mit einem einzelnen Funkempfangskanal ein Funksignal peilen und gleichzeitig die darin enthaltenen Toninhalte ohne Signalstörungen gewinnen. Weiterhin können Funkempfangsvorrichtungen mit einem einzelnen Funkempfangskanal auf zwei unabhängig wählbaren Empfangsfrequenzkanälen bzw. Empfangsfrequenzen die Toninformation ohne Signalstörungen gewinnen.

## Patentansprüche

1. Überwachungsempfänger (1), mit mindestens einer Empfangsantenne (2), welche ausgebildet ist, mindestens ein Funksignal zu empfangen,
mit einer Schalteinheit (3), welche ausgebildet ist, zwischen verschiedenen Empfangsantennen (2) und/oder Empfangsfrequenzen zum Erzeugen eines Empfangssignals periodisch umzuschalten,
mit einer Demodulationseinheit (6), welche ausgebildet ist, das empfangene Funksignal zur Gewinnung eines durch das Funksignal transportierten Audiosignals zu demodulieren,
mit einem Signalspeicher (7), welcher ausgebildet ist,
das demodulierte Audiosignal als Empfangssignal einschließlich der darin enthaltenen Signalstörungen zwischen zu speichern;
mit einer Berechnungseinheit (5), welche ausgebildet ist, basierend auf dem Empfangssignal eine Audiosignalsequenz (ASS) aus Audiosignalabschnitten (ASA) des in dem Signalspeicher (7) zwischengespeicherten Empfangssignals zu interpolieren, die unmittelbar vor und/oder nach der aufgetretenen Signalstörung liegen; und
mit einer Ersetzungseinheit (8), welche ausgebildet ist, durch das periodische Umschalten hervorgerufene Signalstörungen innerhalb des Empfangssignals jeweils durch die Audiosignalsequenz (ASS) zu ersetzen, mit einer Ablaufsteuerung (4), welche ausgebildet ist, das periodische Umschalten der Empfangsantennen (2) und/oder Empfangsfrequenzen zu steuern, wobei die Berechnungseinheit (5) mit der Ablaufsteuerung (4) verbunden ist, und wobei die Ablaufsteuerung (4) dazu ausgelegt ist, Schaltzeitpunkte für das Umschalten der Empfangsantennen (2) und/oder Empfangsfrequenzen an die Berechnungseinheit (5) zu melden.

2. Überwachungsempfänger nach Anspruch 1,
wobei die Schalteinheit (3) des Überwachungsempfängers (1) ausgebildet ist, zum Anpeilen einer Funksignalquelle verschiedene Empfangsantennen (2) bei gleicher Empfangsfrequenz periodisch umzuschalten.

3. Überwachungsempfänger nach Anspruch 2,
wobei während des Anpeilens einer Funksignalquelle die Demodulationseinheit (6) ausgebildet ist, zur Gewinnung eines durch das Funksignal transportierten Audiosignals (AS) das empfangene Funksignal zu demodulieren, wobei die Ersetzungseinheit (8) ausgebildet ist, durch das periodische Umschalten der Empfangsantennen (2) hervorgerufenen Signalstörungen innerhalb des demodulierten Funksignals durch eine Audiosignalsequenz (ASS) zu ersetzen, die durch die Berechnungseinheit (5) des Überwachungsempfängers (1) aus dem empfangenen Funksignal berechnet wird.

4. Überwachungsempfänger nach Anspruch 1,
wobei die Schalteinheit (3) ausgebildet ist, zum Abhören und/oder zur Vermessung/Klassifizierung verschiedener Sendekanäle und/oder zur Signalsuche zwischen verschiedenen Empfangsfrequenzen und/oder Empfangsfrequenzbereichen periodisch umzuschalten.

5. Überwachungsempfänger nach Anspruch 4,
wobei die Demodulationseinheit (6) ausgebildet ist, aus den verschiedenen Empfangsfrequenzen empfangenen Funksignale zur Gewinnung der durch die Funksignale transportierten Audiosignale zu demodulieren,
wobei Ersetzungseinheit (8) ausgebildet ist, die durch das periodische Umschalten zwischen den Empfangsfrequenzen innerhalb der demodulierten Funksignale hervorgerufenen Signalstörungen jeweils durch die Audiosignalsequenz (ASS) zu ersetzen, die durch die Berechnungseinheit (5) des Überwachungsempfängers (1) aus dem empfangenen und demodulierten entsprechenden Funksignal berechnet wird.

6. Überwachungsempfänger nach Anspruch 1,
wobei die Schalteinheit (3) ausgebildet ist, zum Anpeilen einer Funksignalquelle auf einer bestimmten Empfangsfrequenz zwischen verschiedenen Empfangsantennen (2) periodisch umzuschalten und/oder parallel dazu zum Abhören und/oder zur Vermessung/Klassifizierung verschiedener Sendekanäle und/oder zur Signalsuche zwischen verschiedenen Empfangsfrequenzen und/oder Empfangsfrequenzbereichen periodisch umzuschalten.

7. Verfahren zum Beseitigen von Signalstörungen, die periodisch innerhalb eines Empfangssignals auftreten und durch ein periodisches Umschalten zwischen verschiedenen Empfangsantennen (2) und/oder Empfangsfrequenzen hervorgerufen werden, wobei das periodische Umschalten der Empfangsantennen (2) und/oder Empfangsfrequenzen mittels einer Ablaufsteuerung (4) gesteuert wird, aufweisend:
Demodulieren eines empfangenen Funksignals durch eine Demodulationseinheit (6) zur Gewinnung eines durch das Funksignal transportierten Audiosignals,
Zwischenspeichern des demodulierten Funksignals als Empfangssignal einschließlich der darin enthaltenen Signalstörungen in einem Signalspeicher (7),
Interpolieren einer jeweils eine Signalstörung ersetzenden Audiosignalsequenz (ASS) aus Audiosignalabschnitten (ASA) des in dem Signalspeicher (7) zwischengespeicherten Empfangssignals, die unmittelbar vor und/oder nach der aufgetretenen Signalstörung liegen, durch eine Berechnungseinheit (5), und
automatisches Ersetzen der periodisch auftretenden Signalstörungen durch die jeweilige Audiosignalsequenz (ASS), wobei Schaltzeitpunkte für das Umschalten der Empfangsantennen (2) und/oder Empfangsfrequenzen von der Ablaufsteuerung (4) an die Berechnungseinheit (5) gemeldet werden.

## Claims

1. A monitoring receiver (1), with at least one receiving antenna (2), which is configured to receive at least one radio signal,
with a switching unit (3) which is configured to periodically switch between different receiving antennas (2) and/or receiving frequencies for generating a receiving signal,
with a demodulation unit (6), which is configured to demodulate the received radio signal to obtain an audio signal transported by the radio signal,
with a signal storage (7), which is configured to place in temporary storage the demodulated audio signal as a receiving signal including the signal interference contained therein;
with a calculation unit (5), which is configured to, based on the receiving signal, interpolate an audio signal sequence (ASS) of audio signal sections (ASA) of the receiving signal temporarily stored in the signal storage (7) which lie immediately before and/or after the occurred signal interference; and
with a replacement unit (8), which is configured to replace the signal interference within the receiving signal caused by the periodic switching in each case with the audio signal sequence (ASS),
with a sequence controller (4), which is configured to control the periodic switching of the receiving antennas (2) and/or receiving frequencies, wherein the calculation unit (5) is connected to the sequence controller (4), and wherein the sequence controller (4) is designed to report switching times for the switching of the receiving antennas (2) and/or receiving frequencies to the calculation unit (5).

2. The monitoring receiver according to claim 1,
wherein the switching unit (3) of the monitoring receiver (1) is configured to periodically switch different receiving antennas (2) at the same receiving frequency to locate a radio signal source.

3. The monitoring receiver according to claim 2,
wherein during the location of a radio signal source the demodulation unit (6) is configured to demodulate the received radio signal to obtain an audio signal (AS) transported by the radio signal, wherein the replacement unit (8) is configured to replace the signal interference within the demodulated radio signal by an audio signal sequence (ASS) by periodically switching the receiving antennas (2), which is calculated by the calculation unit (5) of the monitoring receiver (1) from the received radio signal.

4. The monitoring receiver according to claim 1,
wherein the switching unit (3) is configured to switch between different receiving frequencies and/or receiving frequency ranges for interception and/or measurement/classification of different transmission channels and/or for signal search.

5. The monitoring receiver according to claim 4,
wherein the demodulation unit (6) is configured to demodulate radio signals received from the different receiving frequencies to obtain the audio signals transported by the radio signals,
wherein the replacement unit (8) is configured to replace the signal interference caused by the periodic switching between the receiving frequencies within the demodulated radio signals in each case by the audio signal sequence (ASS), which is calculated by the calculation unit (5) of the monitoring receiver (1) from the corresponding received and demodulated radio signal.

6. The monitoring receiver according to claim 1,
wherein the switching unit (3) is configured to periodically switch between different receiving antennas (2) to locate a radio signal source at a specified receiving frequency and/or parallel thereto to periodically switch between different receiving frequencies and/or receiving frequency ranges for interception and/or measurement/classification of different transmitting channels and/or for signal search.

7. A method for removing signal interference which periodically occurs within a receiving signal and caused by a periodic switching between different receiving antennas (2) and/or receiving frequencies, wherein the periodic switching of the receiving antennas (2) and/or receiving frequencies is controlled by means of a sequence controller (4), comprising:
Demodulation of a received radio signal by a demodulation unit (6) for obtaining an audio signal transported by the radio signal,
Temporary storage of the demodulated radio signal as a receiving signal including the signal interference contained therein in a signal storage (7),
Interpolation of a respective audio signal sequence (ASS) replacing a signal interference from audio signal sections (ASA) of the receiving signal temporarily stored in the signal storage (7), which lie immediately before and/or after the occurred signal interference, by a calculation unit (5), and
automatic replacement of the periodically occurring signal interference by the respective audio signal sequence (ASS), wherein switching times for the switching of the receiving antennas (2) and/or receiving frequencies are reported by the sequence controller (4) to the calculation unit (5).

## Revendications

1. Récepteur de surveillance (1), avec au moins une antenne de réception (2), laquelle est réalisée pour recevoir au moins un signal radio,
avec une unité de commutation (3), laquelle est réalisée pour effectuer périodiquement une commutation entre différentes antennes de réception (2) et/ou fréquences de réception pour produire un signal de réception,
avec une unité de démodulation (6), laquelle est réalisée pour démoduler le signal radio reçu pour l'obtention d'un signal audio transporté par le signal radio,
avec une mémoire de signal (7), laquelle est réalisée pour mettre en mémoire le signal audio démodulé en tant que signal de réception y compris les perturbations de signal contenues dans celui-ci ;
avec une unité de calcul (5), laquelle est réalisée, sur la base du signal de réception, pour interpoler une séquence de signal audio (ASS) composée de parties de signal audio (ASA) du signal de réception mis temporairement en mémoire dans la mémoire de signal (7), qui se situent immédiatement avant et/ou après la perturbation de signal apparue ; et
avec une unité de remplacement (8), laquelle est réalisée pour remplacer les perturbations de signal provoquées par la commutation périodique à l'intérieur du signal de réception respectivement par la séquence de signal audio (ASS),
avec une commande de déroulement (4), laquelle est réalisée pour commander la commutation périodique des antennes de réception (2) et/ou fréquences de réception, dans lequel l'unité de calcul (5) est reliée à la commande de déroulement (4), et dans lequel la commande de déroulement (4) est conçue pour notifier des moments de commutation pour la commutation des antennes de réception (2) et/ou fréquences de réception à l'unité de calcul (5).

2. Récepteur de surveillance selon la revendication 1,
dans lequel l'unité de commutation (3) du récepteur de surveillance (1) est réalisée, pour le repérage d'une source de signal radio, pour commuter périodiquement différentes antennes de réception (2) à une fréquence de réception identique.

3. Récepteur de surveillance selon la revendication 2,
dans lequel pendant le repérage d'une source de signal radio, l'unité de démodulation (6) est réalisée, pour l'obtention d'un signal audio (AS) transporté par le signal radio, pour démoduler le signal radio reçu, dans lequel l'unité de remplacement (8) est réalisée pour remplacer les perturbations de signal provoquées par la commutation périodique des antennes de réception (2) à l'intérieur du signal radio démodulé par une fréquence de signal audio (ASS), qui est calculée par l'unité de calcul (5) du récepteur de surveillance (1) à partir du signal radio reçu.

4. Récepteur de surveillance selon la revendication 1,
dans lequel l'unité de commutation (3) est réalisée, pour l'écoute et/ou pour la mesure/classification de différents canaux d'émission et/ou pour la recherche de signal, pour effectuer une commutation entre différentes fréquences de réception et/ou plages de fréquences de réception.

5. Récepteur de surveillance selon la revendication 4,
dans lequel l'unité de démodulation (6) est réalisée pour démoduler les signaux radio reçus à partir des différentes fréquences de réception pour l'obtention des signaux audio transportés par les signaux radio,
dans lequel l'unité de remplacement (8) est réalisée pour remplacer les perturbations de signal provoquées par la commutation périodique entre les fréquences de réception à l'intérieur des signaux audio démodulés respectivement par la séquence de signal audio (ASS), qui est calculée par l'unité de calcul (5) du récepteur de surveillance (1) à partir du signal audio correspondant reçu et démodulé.

6. Récepteur de surveillance selon la revendication 1,
dans lequel l'unité de commutation (3) est réalisée, pour le repérage d'une source de signal radio à une fréquence de réception définie, pour effectuer périodiquement une commutation entre différentes antennes de réception (2) et/ou parallèlement à cela, pour l'écoute et/ou pour la mesure/classification de différents canaux d'émission et/ou pour la recherche de signal, pour effectuer périodiquement une commutation entre différentes fréquences de réception et/ou plages de fréquences de réception.

7. Procédé pour éliminer des perturbations de signal, qui apparaissent périodiquement à l'intérieur d'un signal de réception et sont provoquées par une commutation périodique entre différentes antennes de réception (2) et/ou fréquences de réception, dans lequel la commutation périodique des antennes de réception (2) et/ou fréquences de réception est commandée au moyen d'une commande de déroulement (4), présentant :
la démodulation d'un signal radio reçu par une unité de démodulation (6) pour l'obtention d'un signal audio transporté par le signal radio,
la mise en mémoire temporaire du signal radio démodulé en tant que signal de réception y compris les perturbations de signal contenues dans celui-ci dans une mémoire de signal (7),
l'interpolation d'une séquence de signal audio (ASS), remplaçant respectivement une perturbation de signal, composée de parties de signal audio (ASA) du signal de réception mis temporairement en mémoire dans la mémoire de signal (7), qui se situent immédiatement avant et/ou après la perturbation de signal apparue, par une unité de calcul (5), et
le remplacement automatique des perturbations de signal apparaissant périodiquement par la séquence de signal audio (ASS) respective, dans lequel les moments de commutation pour la commutation des antennes de réception (2) et/ou fréquences de réception sont notifiés par la commande de déroulement (4) à l'unité de calcul (5).
